# FASCICULE DE BREVET EUROPEEN

(11) **EP 4 427 281 B1**
(45) Date de publication et mention de la délivrance du brevet: **10.09.2025**
(21) Numéro de dépôt: 22782881.1
(22) Date de dépôt: 22.09.2022
(51) Int. Cl.: H01M 4/485, H01M 4/505, H01M 4/58, H01M 10/0525, H01M 10/0569, H01M 10/42, H01M 10/0567, H01M 10/0568

(54) **ÉLÉMENT ÉLECTROCHIMIQUE DE TYPE LITHIUM-ION**
ELEKTROCHEMISCHES ELEMENT DES LITHIUM-IONEN-TYPS
LITHIUM-ION ELECTROCHEMICAL ELEMENT

(30) Priorité: 05.11.2021 FR 2111757
(43) Date de publication de la demande: 11.09.2024
(73) Titulaire: SAFT, 92300 Levallois-Perret (FR)
(72) Inventeur: DEMEAUX, Julien, 33520 BRUGES (FR); OSWALD, Marlène, 33700 MERIGNAC (FR)
(74) Mandataire: Hirsch & Associés
(86) Numéro de dépôt international: PCT/EP2022/076376
(87) Numéro de publication internationale: WO 2023/078611

(56) Documents cités:
- EP-A1- 3 379 613
- WO-A1-2021/037721
- JP-A- 2019 133 773
- KR-A- 20150 131 800
- US-A1- 2015 050 561
- US-A1- 2015 056 514

## Description

### Domaine technique de l'invention

Le domaine technique de l'invention est celui des éléments électrochimiques de type lithium-ion.

### Contexte de l'invention

Des éléments électrochimiques rechargeables de type lithium-ion sont connus de l'état de la technique. En raison de leurs densités d'énergie massique et volumique élevées, ils constituent une source d'énergie électrique prometteuse. Ils comportent au moins une cathode (électrode positive), dont la matière active est généralement un oxyde lithié d'au moins un métal de transition ou un phosphate lithié d'au moins un métal de transition, et au moins une anode (électrode négative) dont la matière active peut être à base de graphite.

L'électrolyte de tels éléments peut être liquide et comprendre un solvant qui peut être un mélange de carbonates cycliques et de carbonates linéaires. Or, les carbonates possèdent des pressions de vapeurs relativement importantes à des températures modérées. Des conditions inhabituelles et/ou abusives d'utilisation de l'élément (surcharge, court-circuit, présence d'une source de chaleur extérieure) peuvent provoquer une augmentation de température et de pression à l'intérieur du conteneur de l'élément. La pression générée par la vaporisation de l'électrolyte peut conduire à une rupture du conteneur de l'élément et à l'émission de vapeurs. Ces vapeurs émises sont susceptibles de s'enflammer au contact d'une étincelle ou d'une surface chaude. On a donc recherché à remplacer les carbonates par d'autres solvants moins inflammables.

Des compositions ternaires de solvant présentant la propriété d'être ininflammables ont été décrites. On peut citer le document WO 2021/037721 A1 qui divulgue une composition constituée :
i) soit d'un mélange de 1,1,1,3,3,3-hexafluoro-2-méthoxypropane (HFMP) et/ou de 1,1,1,3,3,3-hexafluoro-2-(fluorométhoxy)propane (HFMFP), de monofluorocarbonate d'éthylène (F1EC) et de carbonate de 2,2,2-trifluoroéthyle méthyle (F3EMC),
ii) soit d'un mélange de 1,1,1,3,3,3-hexafluoro-2-méthoxypropane (HFMP) et/ou de 1,1,1,3,3,3-hexafluoro-2-(fluorométhoxy)propane (HFMFP), de monofluorocarbonate d'éthylène (F1EC) et d'acétate de 2,2,2-trifluoroéthyle (F3EA).
La matière active anodique de l'élément peut être un matériau carboné ou un composé à base de silicium et d'étain. Il est dit que cet électrolyte est ininflammable et qu'il confère à l'élément une longue durée de vie. Cependant, il a été observé qu'un tel élément, lorsqu'il contient un oxyde lamellaire dans sa cathode, par exemple un oxyde lamellaire de nickel-manganèse-cobalt (NMC) ou de nickel-cobalt-aluminium (NCA), pouvait présenter dans des conditions de cyclage à un fort régime de décharge, par exemple supérieur ou égal à C/5, une baisse de sa capacité à partir du 50^{ème} cycle. On a par exemple observé une perte d'environ 40% de la capacité initiale de l'élément vers le 100^{ème} cycle lorsque celui-ci subit des décharges aux régimes de D/2 ou 1D ou 2D, C ou D représentant la capacité nominale de l'élément, le symbole C étant communément choisi pour indiquer une étape de charge, le symbole D étant communément choisi pour indiquer une étape de décharge.

JP 2019/133773 A décrit aux exemples 1 à 7 du Tableau 1 et à l'exemple 8 du Tableau 2 une composition d'électrolyte comprenant un mélange de monofluorocarbonate d'éthylène (FEC), de carbonate de trifluoroéthyle méthyle (MFEC) et un éther de 1,1,2,2-tétrafluoroéthyle et 2,2,2-trifluoroéthyle (TFEE).

US 2015/050561 A1 décrit aux exemples 2 et 6 un électrolyte contenant un mélange de carbonate de fluoroéthylène (FEC), de carbonate de 2,2,2-trifluoroéthyle méthyle (F3EMC) et d'éther de 1,1,2,2-tétrafluoroéthyle et de 2,2,3,3-tétrafluoropropyle.

EP 3 379 613 A1 décrit un élément électrochimique comprenant une électrode négative qui est un oxyde composite de niobium et de titane et un électrolyte comprenant :
- à l'exemple 24 : un mélange de carbonate d'éthylène (EC) et de carbonate de diéthyle (DEC) dans lequel du carbonate de fluoroéthylène (FEC) est utilisé comme additif,
- à l'exemple 27 : un mélange de carbonate de propylène (PC) et de carbonate de diéthyle (DEC) dans lequel du carbonate de fluoroéthylène (FEC) est utilisé comme additif.

KR 2015 0131800 A décrit un élément électrochimique comprenant une électrode négative qui est un oxyde composite de niobium et de titane et un électrolyte comprenant au moins un solvant choisi dans le groupe consistant en le carbonate d'éthylène (EC), le carbonate de propylène (PC), le carbonate de 1,2-butylène, le carbonate de 2,3-butylène, le carbonate de 1,2-pentylène, le carbonate de 2,3-pentylène, le carbonate de vinylène, le carbonate de vinyléthylène, le carbonate de fluoroéthylene (FEC), le carbonate de diméthyle (DMC), le carbonate de diéthyle (DEC), le carbonate de dipropyle (DPC), le carbonate d'éthyle méthyle (EMC), le carbonate de méthyle propyle (MPC), le carbonate d'éthyle propyle (EPC), l'acétate de méthyle, l'acétate d'éthyle, l'acétate de propyle, le propionate de méthyle, le propionate d'éthyle, le propionate de propyle, la γ-butyrolactone, la γ-valérolactone, la γ-caprolactone, la σ-valérolactone et l'ε-caprolactone.

US 2015/056514 A1 décrit un élément électrochimique comprenant une électrode négative comprenant comme matière active un oxyde composite de niobium et de titane, et un électrolyte comprenant un solvant pouvant être choisi dans le groupe consistant en le carbonate de propylène (PC), le carbonate d'éthylène (EC), le carbonate de butylène (BC), le carbonate de chloroéthylène, les solvants fluorocarbonatés tels que le carbonate de fluoroéthylene (FEC) et le carbonate de trifluorométhyle propylène, de même que les solvants dialkylcarbonatés tels que le carbonate de diméthyle (DMC), le carbonate de diéthyle (DEC), le carbonate de dipropyle (DPC), le carbonate d'éthyle méthyle (EMC), le carbonate de méthyle propyle (MPC) et le carbonate d'éthyle propyle (EPC).

Il existe donc un besoin d'un élément électrochimique qui présente une durée de vie élevée en cyclage, à un régime élevé de décharge, par exemple supérieur ou égal à D/5, et dont l'électrolyte conserve sa propriété d'ininflammabilité.

### Résumé de l'invention

A cet effet, l'invention propose un élément électrochimique comprenant :
a) une cathode contenant une matière active fonctionnant à un potentiel d'au moins 4,7 V par rapport au couple Li⁺/Li ;
b) une anode comprenant au moins un oxyde de titane et de niobium (TNO) de formule : LiₓTi_{a-y}M_{y}Nb_{b-z}M'_{z}O_{((x+4a+5b)/2)-c-d}X_{c} où 0 ≤ x ≤ 5 ; 0 ≤ y ≤ 1 ; 0 ≤ z ≤ 2 ; 1 ≤ a ≤ 5 ; 1 ≤ b ≤ 25 ; 0,25 ≤ a/b ≤ 2 ; 0 ≤ c ≤ 2 et 0 ≤ d ≤ 2 ; 0 < a-y ; 0 < b-z ;
   M et M' représentent chacun au moins un élément choisi dans le groupe constitué de Li, Na, K, Mg, Ca, B, Sc, Ti, V, Cr, Mn, Fe, Co, Ni, Cu, Zn, Al, Y, Zr, Nb, Mo, Ru, Ag, Sn, Sb, Ta, W, Bi, La, Pr, Eu, Nd et Sm ;
   X représente au moins un élément choisi dans le groupe constitué de S, F, CI et Br ;
c) un électrolyte comprenant un solvant comprenant :
   - soit un mélange de 1,1,1,3,3,3-hexafluoro-2-méthoxypropane (HFMP) et/ou de 1,1,1,3,3,3-hexafluoro-2-(fluorométhoxy)propane (HFMFP), de monofluorocarbonate d'éthylène (F1EC) et de carbonate de 2,2,2-trifluoroéthyle méthyle (F3EMC) ;
   - soit un mélange de 1,1,1,3,3,3-hexafluoro-2-méthoxypropane (HFMP) et/ou de 1,1,1,3,3,3-hexafluoro-2-(fluorométhoxy)propane (HFMFP), de monofluorocarbonate d'éthylène (F1EC) et d'acétate de 2,2,2-trifluoroéthyle (F3EA).

Il a été découvert d'une part qu'un oxyde de titane et de niobium utilisé comme matière active anodique, associé au solvant selon l'invention, permettait d'obtenir à la surface de l'anode une couche de passivation dont la structure était favorable à un cyclage de l'élément sur une longue durée.

Il a été découvert d'autre part qu'une matière active cathodique présentant un potentiel de fonctionnement en charge ou en décharge supérieur à 4,7 V par rapport au couple Li⁺/Li, en particulier une matière active de type spinelle, associée au solvant selon l'invention permettait de faire effectuer à l'élément des décharges à un régime élevé.

Selon un mode de réalisation, l'électrolyte comprend en outre du difluorophosphate de lithium LiPO₂F₂.

Selon un mode de réalisation, la matière active fonctionnant à un potentiel d'au moins 4,7 V par rapport au couple Li⁺/Li est choisie parmi :
i) un composé de formule LiₓMn_{2-y-z}M'_{y}M"_{z}O₄ (LMO) où M' et M" sont choisis dans le groupe consistant en B, Mg, AI, Si, Ca, Ti, V, Cr, Fe, Co, Ni, Cu, Zn, Y, Zr, Nb et Mo ; M' et M" étant différents l'un de l'autre, et 1≤x≤1,4 ; 0≤y≤0,6 ; 0≤z≤0,2 avec 0<y+z ;
ii) un composé de formule LiₓM_{1-y-z}M'_{y}M"_{z}PO₄ (LMP), où M est Ni ou Co ;
   M, M' et M" étant différents les uns des autres ; M' et M" étant choisis dans le groupe consistant en B, Mg, AI, Si, Ca, Ti, V, Cr, Fe, Mn, Co, Ni, Cu, Zn, Y, Zr, Nb et Mo, avec 0,8≤x≤1,2 ; 0,5≤1-y-z≤1 ; 0≤y≤0,5 ; 0≤z≤0,2 ;
iii) un composé de formule Li₁₊ₓM₁₋ₓO_{2-y}F_{y} de structure cristalline cubique où M représente au moins un élément choisi dans le groupe constitué de Na, K, Mg, Ca, B, Sc, Ti, V, Cr, Mn, Fe, Co, Ni, Cu, Zn, Al, Y, Zr, Nb, Mo, Ru, Ag, Sn, Sb, Ta, W, Bi, La, Pr, Eu, Nd et Sm et où 0 ≤ x ≤ 0,5 et 0 ≤ y ≤ 1 ;
et un mélange de plusieurs des composés i), ii) et iii).

Selon un mode de réalisation, la matière active fonctionnant à un potentiel d'au moins 4,7 V par rapport au couple Li⁺/Li est mélangée à au moins un phosphate lithié de formule : LiₓMn_{1-y-z}Fe_{y}M_{z}PO₄ où 0,8≤x≤1,2 ; 0≤1-y-z<1 ; 0<y≤1 ; 0≤z≤0,2 et M est choisi dans le groupe constitué de B, Mg, AI, Si, Ca, Ti, V, Cr, Co, Ni, Cu, Zn, Y, Zr, Nb et Mo.

Selon un mode de réalisation, la matière active fonctionnant à un potentiel d'au moins 4,7 V par rapport au couple Li⁺/Li est un composé de formule LiₓMn_{2-y-z}Ni_{y}M"_{z}O₄ (LMNO), avec de préférence z=0.

Selon un mode de réalisation, l'oxyde de titane et de niobium a pour formule TiNb₂O₇.

Selon un mode de réalisation, l'électrolyte comprend en outre un sel de lithium choisi parmi l'hexafluorophosphate de lithium LiPF₆ et le bis(fluorosulfonyl)imidure de lithium Li(FSO₂)₂N (LiFSI).

Selon un mode de réalisation, le solvant de l'électrolyte ne contient que des composés fluorés.

Selon un mode de réalisation, l'électrolyte comprend au moins un sel de lithium et le pourcentage massique de LiPO₂F₂ va de 0,1 à 1 % de la masse de l'ensemble constitué par le solvant et ledit au moins un sel de lithium.

Selon un mode de réalisation, l'électrolyte comprend en outre du sulfate d'éthylène (ESA) et/ou du carbonate de vinylène (VC).

Selon un mode de réalisation, la cathode contient en outre au moins un composé choisi parmi le difluorophosphate de lithium (LiPO₂F₂), le sulfate d'éthylène (ESA) et l'oxalate de lithium (Li₂C₂O₄).

Selon un mode de réalisation,
a) la matière active fonctionnant à un potentiel d'au moins 4,7 V par rapport au couple Li⁺/Li a pour formule LiNi_{0,5}Mn_{1,5}O₄ ;
b) l'oxyde de titane et de niobium (TNO) a pour formule TiNb₂O₇ ;
c) l'électrolyte comprend :
   - un mélange de 1,1,1,3,3,3-hexafluoro-2-méthoxypropane (HFMP) et/ou de 1,1,1,3,3,3-hexafluoro-2-(fluorométhoxy)propane (HFMFP), de monofluorocarbonate d'éthylène (F1EC) et d'acétate de 2,2,2-trifluoroéthyle (F3EA) ;
   - de l'hexafluorophosphate de lithium LiPF_{6 ;}
   - du difluorophosphate de lithium LiPO₂F₂.

Selon un mode de réalisation,
- le 1,1,1,3,3,3-hexafluoro-2-méthoxypropane (HFMP) et/ou le 1,1,1,3,3,3-hexafluoro-2-(fluorométhoxy)propane (HFMFP) représente de 20 à 30 % du volume de solvant,
- le monofluorocarbonate d'éthylène (F1EC) représente de 25 à 35 % du volume de solvant,
- l'acétate de 2,2,2-trifluoroéthyle (F3EA) représente de 40 à 50 % du volume de solvant, la somme des pourcentages des différents composés étant égale à 100.

Selon un mode de réalisation, le pourcentage de difluorophosphate de lithium LiPO₂F₂ représente de 0,1 à 0,5% de la masse de l'ensemble constitué par le solvant et l'hexafluorophosphate de lithium LiPF₆.

### Brève description des figures

Des modes de réalisation de l'invention sont décrits ci-dessous plus en détail avec référence aux figures jointes.
[Fig.1] représente la variation de la tension des éléments A et B au cours du premier cycle de formation à 25°C au régime de charge et de décharge de C/10, D/10.
[Fig.2] représente la variation du pourcentage de rétention de la capacité des éléments A et B et la variation du rendement coulombique de ces éléments au cours du cyclage à 25°C.
[Fig.3] représente la variation de la capacité de l'élément C au cours du cyclage aux régimes de C/5 D/5, C/5 D/2, C/5 D, C/5 2D à 25°C.
[Fig.4] représente la variation des rendements coulombiques des éléments A, B, D et E au cours d'un cyclage en C/5, D/5 à 25°C.

### Description des modes de réalisation de l'invention

Les différents constituants d'un élément électrochimique selon l'invention vont être décrits dans ce qui suit.

### Matière active anodique :

La demanderesse a découvert que le solvant selon l'invention associé à un oxyde de titane et de niobium comme matière active anodique permettait d'obtenir à la surface de l'anode une couche de passivation dont la structure était favorable à un cyclage de longue durée de l'élément. L'association de l'oxyde de titane et de niobium avec l'électrolyte permet de réduire la capacité irréversiblement perdue à chaque cycle effectué. La capacité irréversible est la différence entre la capacité chargée et la capacité déchargée. Comme la capacité irréversiblement perdue à chaque cycle est réduite, il est possible d'augmenter la durée de vie de l'élément en cyclage.

La matière active anodique est constituée d'au moins un oxyde de titane et de niobium lithié ou d'au moins un oxyde de titane et de niobium capable d'être lithié de formule LiₓTi_{a-y}M_{y}Nb_{b-z}M'_{z}O_{((x+4a+5b)/2)-c-d}X_{c} où
0 ≤ x ≤ 5 ; 0 ≤ y ≤ 1 ; 0 ≤ z ≤ 2 ; 1 ≤ a ≤ 5 ; 1 ≤ b ≤ 25 ; 0,25 ≤ a/b ≤ 2 ; 0 ≤ c ≤ 2 et 0 ≤ d ≤ 2 ; 0 < a-y ; 0 < b-z ;
M et M' représentent chacun au moins un élément choisi dans le groupe constitué de Li, Na, K, Mg, Ca, B, Sc, Ti, V, Cr, Mn, Fe, Co, Ni, Cu, Zn, Al, Y, Zr, Nb, Mo, Ru, Ag, Sn, Sb, Ta, W, Bi, La, Pr, Eu, Nd et Sm. De préférence, M et M' représentent chacun au moins un élément choisi dans le groupe constitué de Ti, V, Nb, Mo, Ta et W.
X représente au moins un élément choisi dans le groupe constitué de S, F, CI et Br, de préférence F ou S.

De préférence, d ≤ 0,5.

Un composé préféré a pour formule Ti_{1-y}M_{y}Nb_{2-z}M'_{z}O_{7-c}X_{c}.
M peut être Zr ou V ou Zr associé à V.
M' peut être V.
M' peut être V associé à Sb ou V associé à Ta ou V associé à Sb et à Ta.
y peut aller de 0,01 à 0,10.
z peut aller de 0,01 à 1 ou de 0,1 à 0,5.

Des exemples d'oxydes de titane et de niobium sont :
TiNb₂O₇, c'est-à-dire x=y=z=c=d=0 ; a=1 et b=2 ;
Ti₂Nb₂O₉, c'est-à-dire x=y=z=c=d=0 ; a=2 et b=2 ;
Ti₂Nb₁₀O₂₉, c'est-à-dire x=y=z=c=d=0 ; a=2 et b=10.

Le potentiel de fonctionnement de l'oxyde de titane et de niobium lithié ou de l'oxyde de titane et de niobium capable d'être lithié est de 1,5 V vs. Li⁺/Li.

Selon un mode de réalisation, l'oxyde de titane et de niobium ou l'oxyde de titane et de niobium capable d'être lithié est la seule matière active de l'anode. La présence d'un oxyde lithié de titane, tel que Li₄Ti₅O₁₂, est néfaste à la durée de vie de l'élément, en raison de son interaction avec les composés fluorés du solvant de l'électrolyte. La présence d'un oxyde lithié de titane entraine une forte baisse de la capacité de l'élément dès les premiers cycles.

Deux autres avantages conférés par la présence de l'oxyde de titane et de niobium ou de l'oxyde de titane et de niobium capable d'être lithié sont une bonne stabilité thermique de l'anode en cas d'exposition de l'élément à une surchauffe ou à une surcharge et la possibilité de décharger l'élément sous un fort courant.

### Mode de préparation d'une anode :

L'anode est préparée de manière conventionnelle. Elle consiste en un support conducteur utilisé comme collecteur de courant revêtu sur au moins l'une de ses faces d'une couche d'une composition de matière active anodique. Cette composition de matière active anodique contient l'oxyde de titane et de niobium ou l'oxyde de titane et de niobium capable d'être lithié, comme matière active et généralement un liant et un matériau conducteur électronique.

Le collecteur de courant est de préférence un support conducteur bidimensionnel tel qu'un feuillard plein ou perforé, de préférence en aluminium ou en alliage à base d'aluminium. Éventuellement, le collecteur de courant peut aussi être un feuillard en cuivre ou en alliage à base de cuivre. Le collecteur de courant peut être revêtu sur l'une ou ses deux faces d'une couche de carbone. Le feuillard de l'anode a une épaisseur généralement comprise entre 6 et 30 µm.

Le liant a pour fonction de renforcer la cohésion entre les particules de matière active ainsi que d'améliorer l'adhérence du mélange au collecteur de courant. Le liant peut contenir un ou plusieurs des composés suivants : polyfluorure de vinylidène (PVDF) et ses copolymères, polytétrafluoroéthylène (PTFE) et ses copolymères, polyacrylonitrile (PAN), poly(méthyl)- ou (butyl)méthacrylate, polychlorure de vinyle (PVC), poly(vinyl formal), polyester, polyétheramides séquencés, polymères d'acide acrylique, acide méthacrylique, acrylamide, acide itaconique, acide sulfonique, élastomère et les composés cellulosiques. Le ou les élastomères pouvant être utilisés comme liant peuvent être choisis parmi le styrène-butadiène (SBR), le butadiène-acrylonitrile (NBR), le butadiène-acrylonitrile hydrogéné (HNBR), et un mélange de plusieurs de ceux-ci.

Le matériau conducteur électronique est généralement choisi parmi le graphite, le noir de carbone, le noir d'acétylène, la suie, le graphène, les nanotubes de carbones ou un mélange de ceux-ci. Il est utilisé en faible quantité, généralement 5 % ou moins par rapport à la somme des masses du mélange de matières actives, du ou des liant(s) et du matériau conducteur électronique. Le matériau conducteur électronique peut également se présenter sous la forme d'un revêtement de carbone autour des particules de matière active.

L'oxyde de titane et de niobium ou l'oxyde de titane et de niobium capable d'être lithié, est mélangé sous forme de poudre, généralement à un liant, et à un matériau conducteur électronique. Il peut aussi être mélangé à une autre matière active à condition que celle-ci ne soit pas un oxyde lithié de titane. De préférence, il n'y a pas d'autres matières actives anodiques que l'oxyde de titane et de niobium lithié et/ou l'oxyde de titane et de niobium capable d'être lithié. On obtient ensuite une encre en incorporant à ce mélange un solvant organique ou aqueux. Cette encre est déposée sur au moins une face du collecteur de courant. En faisant varier la quantité de solvant incorporée au mélange, on peut faire varier la viscosité de l'encre avant de la déposer sur le collecteur de courant. Le collecteur de courant enduit d'encre est séché puis laminé afin d'ajuster son épaisseur. Une anode est ainsi obtenue.

Une composition typique d'anode, après évaporation du solvant contenu dans l'encre, est :
- de 75 à 96 % en masse de matière active anodique, de préférence de 80 à 85 % ;
- de 2 à 15 % en masse de liant(s), de préférence 5 % ;
- de 2 à 10 % en masse de composé conducteur électronique, de préférence 7,5 %.

### Matière active cathodique :

La cathode contient une ou plusieurs matière(s) active(s) cathodique(s) caractérisée(s) par un potentiel de fonctionnement en charge ou en décharge supérieur à 4,7 V par rapport au couple Li⁺/Li. Cette caractéristique est une caractéristique intrinsèque de la matière active et peut être aisément mesurée par des essais de routine pour un homme du métier. Pour ce faire, l'homme du métier réalise un élément électrochimique comprenant une première électrode constituée de lithium métallique et une seconde électrode comprenant la matière active dont on veut déterminer le potentiel par rapport au couple électrochimique Li⁺/Li. Ces deux électrodes sont séparées par une membrane microporeuse en polyoléfine, typiquement en polyéthylène, et/ou en polypropylène imprégné d'électrolyte, pouvant être :
i) soit un mélange de 1,1,1,3,3,3-hexafluoro-2-méthoxypropane (HFMP) et/ou de 1,1,1,3,3,3-hexafluoro-2-(fluorométhoxy)propane (HFMFP), de monofluorocarbonate d'éthylène (F1EC) et de carbonate de 2,2,2-trifluoroéthyle méthyle (F3EMC),
ii) soit un mélange de 1,1,1,3,3,3-hexafluoro-2-méthoxypropane (HFMP) et/ou de 1,1,1,3,3,3-hexafluoro-2-(fluorométhoxy)propane (HFMFP), de monofluorocarbonate d'éthylène (F1EC) et d'acétate de 2,2,2-trifluoroéthyle (F3EA) , dans lequel est dissous du LiPF₆ à une concentration de 1 mol.L⁻¹. La mesure de potentiel est réalisée à 25°C. Des matières actives présentant un potentiel de fonctionnement supérieur à 4,7 V par rapport au potentiel du couple électrochimique Li⁺/Li sont également décrites dans la littérature.

On peut citer comme composés présentant un potentiel de fonctionnement en charge ou en décharge supérieur à 4,7 V par rapport à Li⁺/Li les exemples suivants :
i) les composés de formule LiₓMn_{2-y-z}M'_{y}M"_{z}O₄ (LMO) de la famille des spinelles, où M' et M" sont choisis dans le groupe consistant en B, Mg, AI, Si, Ca, Ti, V, Cr, Fe, Co, Ni, Cu, Zn, Y, Zr, Nb et Mo ; M' et M" étant différents l'un de l'autre, et 1≤x≤1,4 ; 0≤y≤0,6 ; 0≤z≤0,2 avec 0<y+z. De préférence au moins un des éléments M' ou M" est Ni ou Co.
ii) les composés de formule LiₓM_{1-y-z}M'_{y}M"_{z}PO₄ (LMP), où M est Ni ou Co ; M, M' et M" étant différents les uns des autres ; M' et M" étant choisis dans le groupe consistant en B, Mg, AI, Si, Ca, Ti, V, Cr, Fe, Mn, Co, Ni, Cu, Zn, Y, Zr, Nb et Mo, avec 0,8≤x≤1,2 ; 0,5≤1-y-z≤1 ; 0≤y≤0,5 ; 0≤z≤0,2 ;
iii) les composés de formule Li₁₊ₓM₁₋ₓO_{2-y}F_{y} de structure cristalline cubique où M représente au moins un élément choisi dans le groupe constitué de Na, K, Mg, Ca, B, Sc, Ti, V, Cr, Mn, Fe, Co, Ni, Cu, Zn, Al, Y, Zr, Nb, Mo, Ru, Ag, Sn, Sb, Ta, W, Bi, La, Pr, Eu, Nd et Sm et où 0 ≤ x ≤ 0,5 et 0 ≤ y ≤ 1.

Un exemple préféré de composé de type i) a pour formule LiMn_{2-y}Ni_{y}O₄ où 0≤y≤0,6, tel que LiMn_{1,5}Ni_{0,5}O₄.

Des exemples préférés de composé de type ii) sont LiNiPO₄ et LiCoPO₄.

La matière active cathodique fonctionnant à un potentiel supérieur à 4,7 V par rapport au couple Li⁺/Li peut être mélangée à un phosphate lithié de formule :
LiₓMn_{1-y-z}Fe_{y}M_{z}PO₄ où 0,8≤x≤1,2 ; 0≤1-y-z<1 ; 0<y≤1 ; 0≤z≤0,2 et M est choisi dans le groupe constitué de B, Mg, AI, Si, Ca, Ti, V, Cr, Co, Ni, Cu, Zn, Y, Zr, Nb et Mo. Le plateau de tension à 4,7 V attribuable à la matière active cathodique fonctionnant à un potentiel supérieur à 4,7 V reste visible sur les courbes de charge/décharge de l'élément, même en présence de ce phosphate lithié.

Ne présentent pas un potentiel de fonctionnement supérieur à 4,7 V par rapport au potentiel du couple électrochimique Li⁺/Li les composés de type LiₓCo_{1-y}M_{y}O₂ typiquement LiCoO₂, LiₓNi_{1-y}M_{y}O₂ typiquement LiNiO₂, LiₓMn_{1-y}M_{y}O₂ typiquement LiMnO₂, avec 0,8≤x≤1,4 ; 0≤y≤0,5, LiₓNi_{1-y-z}Co_{y}Mn_{z}O₂ (matériaux dits NMC), avec 0,8≤x≤1,4 ; 0<y≤0,5 et 0<z≤0,5 ; LiₓNi_{1-y-z}Co_{y}Al_{z}O₂ (matériaux dits NCA), avec 0,8≤x≤1,4 ; 0<y≤0,5 et 0<z≤0,5 ; LiMn₂O₄ et ceux du type LiₓFe_{1-y}M_{y}PO₄ où 0,8≤x≤1,2 ; 0≤y≤0,5 (typiquement LiFePO₄). (M représente un élément substituant de l'élément de transition). La demanderesse a constaté que l'association d'oxydes lamellaires de type NMC et NCA avec la composition de solvant selon l'invention ne donnait pas de bons résultats si l'élément est utilisé en cyclage à un courant de décharge est trop élevé, par exemple supérieur ou égal à D/5. Sans vouloir être lié par la théorie, la demanderesse est d'avis que ceci peut s'expliquer par une cinétique trop lente d'insertion du lithium dans l'oxyde lamellaire lors de la décharge. Au contraire, les composés de formule LiₓMn_{2-y-z}M'_{y}M"_{z}O₄ (LMO) de la famille des spinelles associés à la composition de solvants selon l'invention permettent d'obtenir de bonnes performances en cyclage de l'élément, pour un régime élevé de décharge.

En associant une anode dont la couche de passivation présente une structure favorable à une durée de vie élevée de l'élément à une cathode dont la matière active permet des décharges à fort régime, il est possible d'obtenir un élément présentant une bonne durée de vie en cyclage, et ce même pour un régime élevé de décharge. L'électrolyte de l'élément conserve ses propriétés d'ininflammabilité en raison de la présence du solvant fluoré.

Un autre avantage conféré par la présence d'un oxyde lithié de manganèse et de nickel de type spinelle dans la cathode est une bonne stabilité thermique de la cathode en cas d'exposition de l'élément à une surchauffe ou à une surcharge, supérieure à celle d'un élément dont la matière active cathodique serait à base d'un oxyde lamellaire de type NMC et NCA.

### Mode de préparation d'une cathode :

On prépare un mélange comprenant une ou plusieurs matières actives telles que décrites ci-avant, un ou plusieurs liants, un ou plusieurs additifs, éventuellement un composé bon conducteur électronique, tel que le noir de carbone et un solvant aqueux ou organique.

Le liant peut être choisi parmi la carboxyméthylcellulose (CMC), un copolymère de butadiène - styrène (SBR), le polytétrafluoroéthylène (PTFE), le polyamideimide (PAI), le polyimide (PI), le caoutchouc styrène-butadiène (SBR), l'alcool polyvinylique, le polyfluorure de vinylidène (PVDF), le poly(fluorure de vinylidère-co-hexafluoropropylène) (PVDF-HFP), le caoutchouc butadiène-acrylonitrile (NBR) et le caoutchouc butadiène-acrylonitrile hydrogéné (HNBR) et un mélange de ceux-ci.

Un ou plusieurs additif(s) peu(ven)t être incorporé(s) au mélange. L'additif peut être choisi parmi le difluorophosphate de lithium (LiPO₂F₂), le sulfate d'éthylène (ESA), et l'oxalate de lithium (Li₂C₂O₄).

Le ou les additif(s) peuvent être incorporé(s) au mélange à raison chacun de 0,05 à 1% en masse d'additif par rapport à la masse de la ou des matières actives cathodiques, de préférence de 0,10 à 0,80 %, de préférence encore de 0,20 à 0,50 %. Une quantité totale d'additif(s) supérieure à 1 % peut entrainer une augmentation de la résistance de la composition de matière active cathodique. L'additif préféré est LiPO₂F₂ car d'une part, il est peu soluble dans l'électrolyte et d'autre part, même en cas de décomposition, il ne génère pas de gaz de façon excessive. La décomposition éventuelle de LiPO₂F₂ n'entraine pas d'augmentation notable de la pression interne du conteneur de l'élément. Ces additifs permettent la création d'une couche passivante au voisinage de la cathode, qui limite la décomposition de l'électrolyte à haut potentiel. L'incorporation d'un ou de plusieurs de ces additifs dans la formulation de l'encre de la cathode permet de bénéficier de la présence de ces additifs directement à la cathode et ainsi de s'affranchir du problème de la limitation de l'apport en ces additifs à la cathode en raison de la lenteur de leur diffusion à travers le volume de l'électrolyte.

Une composition typique de cathode, après évaporation du solvant contenu dans l'encre, est la suivante :
- de 75 à 95 % en masse de matière active cathodique, de préférence de 80 à 90 % ;
- de 2 à 15 % en masse de liant(s), de préférence 10 % ;
- de 2 à 10 % en masse de composé conducteur électronique, de préférence 10 % ;
- de 0,04 à moins de 1 % en masse d'additif(s).

L'encre de la cathode obtenue est déposée sur l'une ou les deux faces d'un collecteur de courant. Le collecteur de courant de la cathode se présente sous la forme d'un feuillard métallique plein ou perforé. Le feuillard peut être fabriqué à partir de différents matériaux. On peut citer le cuivre ou les alliages de cuivre, l'aluminium ou les alliages d'aluminium, le nickel ou les alliages de nickel, et l'acier inoxydable. Le collecteur de courant de la cathode est généralement un feuillard en aluminium ou un alliage comprenant majoritaire-ment de l'aluminium. Le feuillard de la cathode a une épaisseur généralement comprise entre 6 et 30 µm. Selon un mode de réalisation préféré, le collecteur en aluminium de la cathode est recouvert d'un revêtement conducteur, comme par exemple le noir de carbone, le graphite.

Le collecteur de courant enduit d'encre est séché puis laminé afin d'ajuster son épaisseur. Une cathode est ainsi obtenue.

### Electrolyte :

L'électrolyte est de préférence liquide. Il comprend un solvant comprenant :
- soit un mélange i) de 1,1,1,3,3,3-hexafluoro-2-méthoxypropane (HFMP) et/ou de 1,1,1,3,3,3-hexafluoro-2-(fluorométhoxy)propane (HFMFP), de monofluorocarbonate d'éthylène (F1EC) et de carbonate de 2,2,2-trifluoroéthyle méthyle (F3EMC),
- soit un mélange ii) de1,1,1,3,3,3-hexafluoro-2-méthoxypropane (HFMP) et/ou de 1,1,1,3,3,3-hexafluoro-2-(fluorométhoxy)propane (HFMFP), de monofluorocarbonate d'éthylène (F1EC) et d'acétate de 2,2,2-trifluoroéthyle (F3EA).

Les formules chimiques des différents composés chimiques du solvant sont données ci-après.
- HFMP : 1,1,1,3,3,3-hexafluoro-2-méthoxypropane, encore désigné dans ce qui suit par le terme hexafluorométhoxypropane 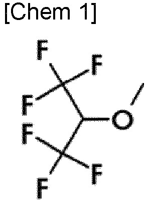
- HFMFP : 1,1,1,3,3,3-hexafluoro-2-(fluorométhoxy)propane, encore désigné dans ce qui suit par le terme hexafluoro(fluorométhoxy)propane 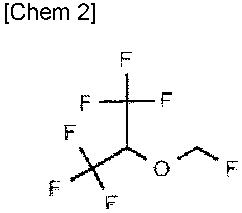
- F1EC : monofluorocarbonate d'éthylène ou 4-fluoro-1,3-dioxolan-2-one 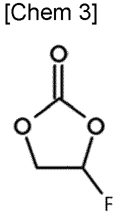
- F3EMC : carbonate de 2,2,2-trifluoroéthyle méthyle carbonate, encore désigné dans ce qui suit par le terme carbonate de trifluoroéthyle méthyle 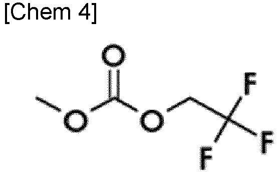
- F3EA : acétate de 2,2,2-trifluoroéthyle, encore désigné dans ce qui suit par le terme acétate de trifluoroéthyle

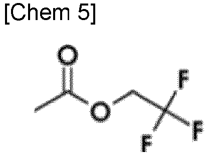

L'utilisation d'hexafluorométhoxypropane (HFMP) et/ou d'hexafluoro(fluorométhoxy) propane (HFMFP) en association avec :
- soit un mélange i) de monofluorocarbonate d'éthylène (F1EC) et de carbonate de trifluoroéthyle méthyle (F3EMC),
- soit un mélange ii) de monofluorocarbonate d'éthylène (F1EC) et d'acétate de trifluoroéthyle (F3EA),
permet d'améliorer la durée de vie de l'élément.

L'hexafluorométhoxypropane (HFMP) et/ou l'hexafluoro(fluorométhoxy)propane (HFMFP) peut représenter de 10 à 50 % du volume de solvant ou de 15 à 40 % du volume de solvant ou de 20 à 30 % du volume de solvant.

Dans le cas du mélange i), la somme des pourcentages volumiques de l'hexafluorométhoxypropane (HFMP) et/ou de l'hexafluoro(fluorométhoxy)propane (HFMFP) et du carbonate de trifluoroéthyle méthyle (F3EMC) exprimés par rapport au volume de solvant peut être supérieure ou égale à 50 % ou supérieure ou égale à 60 % ou supérieure ou égale à 70 %. L'hexafluorométhoxypropane (HFMP) et/ou de l'hexafluoro(fluorométhoxy)propane (HFMFP) peut représenter de 20 à 30 % du volume de solvant. Le monofluorocarbonate d'éthylène (F1EC) peut représenter de 15 à 40 % du volume de solvant. Le carbonate de trifluoroéthyle méthyle (F3EMC) peut représenter de 30 à 50 % du volume de solvant.

Dans le cas du mélange ii), la somme des pourcentages volumiques de l'hexafluorométhoxypropane (HFMP) et/ou de l'hexafluoro(fluorométhoxy)propane (HFMFP) et de l'acétate de trifluoroéthyle (F3EA) exprimés par rapport au volume de solvant peut être supérieure ou égale à 50 % ou supérieure ou égale à 60 % ou supérieure ou égale à 70 %. L'hexafluorométhoxypropane (HFMP) et/ou l'hexafluoro(fluorométhoxy)propane (HFMFP) peut représenter de 20 à 30 % du volume de solvant. Le monofluorocarbonate d'éthylène (F1EC) peut représenter de 15 à 40 % du volume de solvant. L'acétate de trifluoroéthyle (F3EA) peut représenter de 30 à 50 % du volume de solvant.

Le solvant peut être constitué uniquement des composés chimiques du mélange i) ou être constitué uniquement des composés chimiques du mélange ii).

Le solvant peut ne contenir :
- aucun autre carbonate cyclique que le monofluorocarbonate d'éthylène (F1EC), ou
- aucun autre carbonate linéaire que le carbonate de trifluoroéthyle méthyle (F3EMC), ou
- aucun autre ester que l'acétate de trifluoroéthyle (F3EA), ou
- aucun autre éther que l'hexafluorométhoxypropane (HFMP) et/ou l'hexafluoro(fluorométhoxy) propane (HFMFP).

La présence de carbonates linéaires autres que le carbonate de trifluoroéthyle méthyle F3EMC, par exemple un carbonate linéaire non fluoré, tel que DMC, peut conduire à une couche de passivation plus mince, néfaste à la durée de vie en cyclage de l'élément. De plus, la présence d'un carbonate linéaire non fluoré peut entrainer un problème de miscibilité avec les composés fluorés F1EC et F3EMC. Enfin, la présence d'un carbonate linéaire non fluoré peut entrainer une augmentation de la capacité irréversible de l'élément, ce qui n'est pas souhaitable.

Selon un mode de réalisation, le solvant ne contient pas de composés chimiques non fluorés.

Les mélanges i) et ii) confèrent à l'électrolyte la propriété d'ininflammabilité. L'électrolyte est stable au haut potentiel d'au moins 4,7 V vs. Li⁺/Li imposé par la matière active cathodique.

L'électrolyte comprend aussi au moins un sel de lithium pouvant être choisi parmi l'hexafluorophosphate de lithium LiPF₆, le tétrafluoroborate de lithium LiBF₄, le perchlorate de lithium LiClO₄, l'hexafluoroarsénate de lithium LiAsF₆, l'hexafluoroantimonate de lithium LiSbF₆, le trifluorométhanesulfonate de lithium LiCF₃SO₃, le bis(fluorosulfonyl)imidure de lithium Li(FSO₂)₂N (LiFSI), le bis(trifluorométhanesulfonyl)imidure de lithium LiN(CF₃SO₂)₂ (LiTFSI), le trifluorométhanesulfoneméthide de lithium LiC(CF₃SO₂)₃ (LiTFSM), le bisperfluoroéthylsulfonylimidure de lithium LiN(C₂F₅SO₂)₂ (LiBETI), le 4,5-dicyano-2-(trifluoromethyl) imidazolide de lithium (LiTDI), le bis(oxalatoborate) de lithium (LiBOB), le difluoro(oxalato)borate de lithium (LiDFOB), le tris(pentafluoroethyl)trifluorophosphate de lithium LiPF₃(CF₂CF₃)₃ (LiFAP) et les mélanges de ceux-ci. On choisira de préférence l'hexafluorophosphate de lithium LiPF₆ car il confère de la stabilité à l'électrolyte pour des valeurs élevées de potentiel ou le bis(fluorosulfonyl)imidure de lithium Li(FSO₂)₂N (LiFSI) pour des applications nécessitant une forte puissance. De préférence, LiPF₆ est le seul sel de lithium de l'électrolyte.

La concentration dudit au moins un sel dans l'électrolyte varie de 0,7 à 4 mol.L⁻¹, ou de 1 à 2 mol.L⁻¹, ou de 1,2 à 2 mol.L⁻¹.

De manière inattendue, on a observé que l'électrolyte selon l'invention était stable à la fois au potentiel élevé d'au moins 4,7 V vs. Li⁺/Li de la matière active cathodique et au potentiel de fonctionnement de l'oxyde de titane et de niobium.

L'électrolyte contient de préférence du difluorophosphate de lithium LiPO₂F₂ comme additif. Il permet de limiter la réactivité du monofluorocarbonate d'éthylène (F1EC) contenu dans les mélanges i) et ii) vis-à-vis de l'anode, donc de limiter la croissance de la couche de passivation à l'anode et de prolonger la durée de vie de l'élément. Le pourcentage massique de difluorophosphate de lithium peut représenter de 0,05 à 5 %, ou de 0,05 à 2 %, ou de 0,1 à 1 % ou 0,1 à 0,5 % de 0,2 à 0,5 % de la masse de l'ensemble constitué par le solvant et ledit au moins un sel de lithium.

L'électrolyte peut aussi contenir d'autres additifs tels que du sulfate d'éthylène (ESA) et/ou du carbonate de vinylène (VC).

Dans un mode de réalisation, la composition d'électrolyte contient de l'hexafluorophosphate de lithium (LiPF₆) et du difluorophosphate de lithium (LiPO₂F₂).

Une composition d'électrolyte particulièrement préférée comprend :
a) un solvant comprenant ou consistant en un mélange d'hexafluorométhoxypropane (HFMP) et/ou d'hexafluoro(fluorométhoxy)propane (HFMFP), de monofluorocarbonate d'éthylène (F1EC) et d'acétate de trifluoroéthyle (F3EA),
b) LiPF₆ en une concentration allant de 0,7 à 2 mol.L⁻¹, de préférence entre 1 et 1,5 mol.L⁻¹ ;
c) LiPO₂F₂ en un pourcentage massique allant de 0,05 à 5 %, de préférence de 0,05 à 2 %, de préférence encore de 0,1 à 1 % de la masse de l'ensemble constitué par le solvant et LiPF₆.

### Séparateur :

Le matériau du séparateur peut être choisi parmi les matériaux suivants : une polyoléfine, par exemple le polypropylène, le polyéthylène, un polyester, des fibres de verre liées entre elles par un polymère, le polyimide, le polyamide, le polyaramide, le polyamideimide et la cellulose. Le polyester peut être choisi parmi le téréphtalate de polyéthylène (PET) et le téréphtalate de polybutylène (PBT). Avantageusement, le polyester ou le polypropylène ou le polyéthylène contient ou est revêtu d'un matériau choisi dans le groupe consistant en un oxyde métallique, un carbure, un nitrure, un borure, un siliciure et un sulfure. Ce matériau peut être SiO₂ ou Al₂O₃.

### Préparation du faisceau électrochimique :

On forme un faisceau électrochimique en intercalant un séparateur entre au moins une cathode et au moins une anode. On insère le faisceau électrochimique dans le conteneur de l'élément. Le conteneur de l'élément peut être de format parallélépipèdique ou cylindrique. Dans ce dernier cas, le faisceau électrochimique est spiralé pour former un montage cylindrique des électrodes.

### Remplissage et fermeture du conteneur :

On assemble un couvercle sur le conteneur de l'élément, par exemple par soudure laser. On remplit le conteneur de l'élément par de l'électrolyte. A cette fin, le couvercle peut comprendre un trou de remplissage par lequel l'électrolyte est introduit. Une fois l'électrolyte introduit, ce trou de remplissage est fermé par une bille en acier inoxydable via une soudure électrique de la bille sur le trou.

L'élément obtenu peut par exemple être utilisé dans des applications spatiales ou ferroviaires.

### EXEMPLES

Différents éléments ont été fabriqués. La composition des électrodes et des électrolytes utilisés est indiquée dans le Tableau 1 ci-après. Le séparateur est un séparateur tricouche PP/PE/PP (PP : polypropylène ; PE : polyéthylène).

**[Table 1]**

| Elément | Matière active cathodique | Matière active anodique | Solvant** | LiPF₆ (mol.L⁻¹) | LiPO₂F₂ (%)*** | VC (%)*** |
|---|---|---|---|---|---|---|
| A* | LiNi_{0,5}Mn_{1,5}O₄ | TiNb₂O₇ | EC : PC : EMC : DMC 10 : 20 : 25 : 45 | 1,0 | - | 3 |
| B | LiNi_{0,5}Mn_{1,5}O₄ | TiNb₂O₇ | F1EC : F3EA : HFMFP 30 : 45 : 25 | 1,2 | 0,3 | - |
| C* | Mélange NMC-NCA | TiNb₂O₇ | F1EC : F3EA : HFMP 30 : 45 : 25 | 1,2 | - | - |
| D* | NMC | graphite | EC : PC : EMC : DMC 10 : 20 : 25 : 45 | 1,0 | - | 3 |
| E* | NMC | graphite | F1EC : F3EA : HFMFP 30 : 45 : 25 | 1,2 | 0,3 | - |

| | | | | | | |
|---|---|---|---|---|---|---|
| * Elément ne faisant pas partie de l'invention ** Ratios volumiques *** Pourcentage en masse exprimé par rapport à la somme de la masse du solvant et de la masse de(s) sel(s) de lithium EC : carbonate d'éthylène PC : carbonate de propylène EMC : carbonate de méthyle éthyle DMC : carbonate de diméthyle | | | | | | |

### a) Durée de vie en cyclage de l'élément selon l'invention :

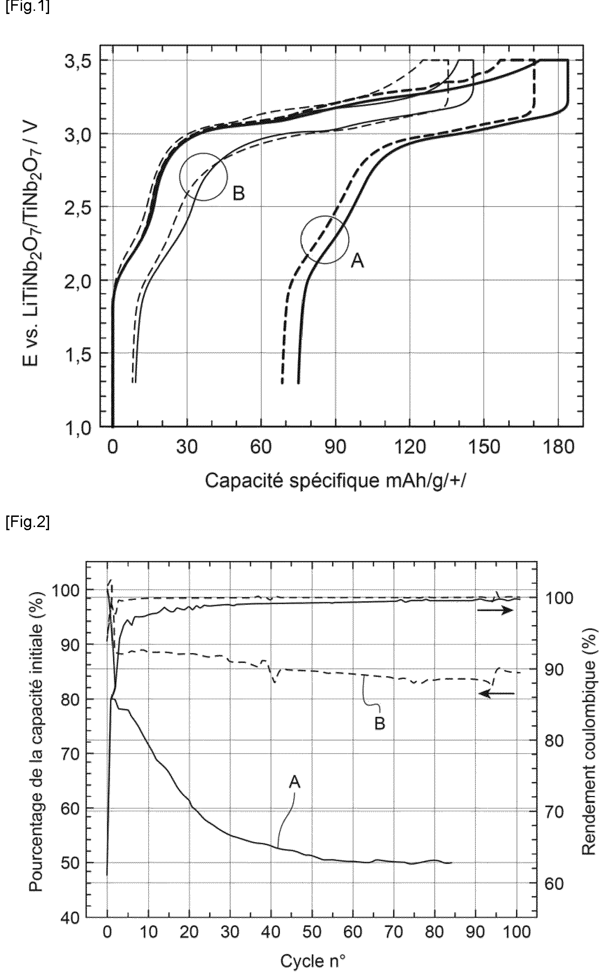

Les éléments A et B ont subi un premier cycle de « formation » à 25°C au régime de C/10 et D/10. La figure 1 représente la variation de la tension des éléments A et B au cours de ce premier cycle de formation. La charge consiste en une première étape de charge à courant constant de C/10 jusqu'à une tension de 3,5 V suivie d'une seconde étape de charge à tension constante de 3,5 V et arrêt de la charge soit lorsque le courant de charge devient inférieur à C/100, soit lorsque la durée nécessaire pour que le courant de charge devienne inférieur à C/100 dépasse 1 h. On note sur la figure 1 que l'élément A hors invention présente une capacité chargée élevée. Cette capacité élevée peut être attribuée à une oxydation prolongée de l'électrolyte. Cette oxydation prolongée entraine une épaisse de couche de passivation sur l'anode. Cela se traduit par une forte polarisation de l'élément A, c'est-à-dire une différence élevée entre la tension en charge et la tension en décharge pour un état de charge donné. Au contraire, l'élément B selon l'invention ne reste pas de manière prolongée en fin de charge à une tension de 3,5 V. La longueur du plateau en fin de charge est plus courte pour l'élément B que pour l'élément A. La capacité chargée de l'élément B est de 146 mAh/g, valeur proche de la capacité théorique. La polarisation de l'élément B est plus faible que celle de l'élément A, ce qui suggère que l'électrolyte de l'élément B est plus stable à l'interface des électrodes et donc que la couche de passivation à l'anode de l'élément B est moins résistive que celle de l'anode de l'élément A. On peut noter pour ce premier cycle de formation une capacité irréversible pour l'élément A voisine de 170 mAh/g alors que la capacité irréversible de l'élément B n'est que de 10 mAh/g.

Les éléments A et B ont subi un cyclage au régime de C/5 et D/5 à 25°C entre les tensions limites de 1,3 et 3,5 V. Chaque charge a consisté en une première étape de charge à courant constant de C/5 jusqu'à une tension de 3,5 V suivie d'une seconde étape de charge à tension constante de 3,5 V et arrêt de la charge soit lorsque le courant de charge devenait inférieur à C/50, soit lorsque la durée nécessaire pour que le courant de charge devienne inférieur à C/100 dépassait 1 h. On a représenté sur la Figure 2 la variation du pourcentage de rétention de la capacité des éléments A et B et la variation du rendement coulombique de ces éléments au cours du cyclage. On note que l'élément B conserve au moins 80 % de sa capacité initiale après 100 cycles alors que l'élément A ne conserve que 50 % de sa capacité initiale après 60 cycles. Le rendement coulombique, c'est-à-dire le rapport entre la capacité déchargée et la capacité chargée, est d'environ 98% sur toute la durée du cyclage pour l'élément B. De plus, il est supérieur à celui de l'élément A, en particulier durant les 20 premiers cycles.

Enfin, on peut noter que l'électrolyte de l'élément A qui contient un mélange de carbonates n'est pas ininflammable, contrairement à celui de l'élément B.

### b) Effet du remplacement de la spinelle LiNi_{0,5}Mn_{1,5}O₄ par un mélange d'oxydes lamellaires du type NMC - NCA :

On a remplacé la spinelle LiNi_{0,5}Mn_{1,5}O₄ de l'élément B par un mélange d'oxydes lamellaires du type NMC - NCA pour obtenir l'élément C. L'élément C a subi un cyclage aux régimes de C/5 D/5, C/5 D/2, C/5 D, C/5 2D à 25°C entre les tensions limites de 1,3 et 3,5 V. Chaque charge a consisté en une première étape de charge à courant constant de C/5 jusqu'à une tension de 3,1 V suivie d'une seconde étape de charge à tension constante de 3,1 V et arrêt de la charge soit lorsque le courant de charge devenait inférieur à C/50, soit lorsque la quantité chargée dépassait 160 mAh/g.

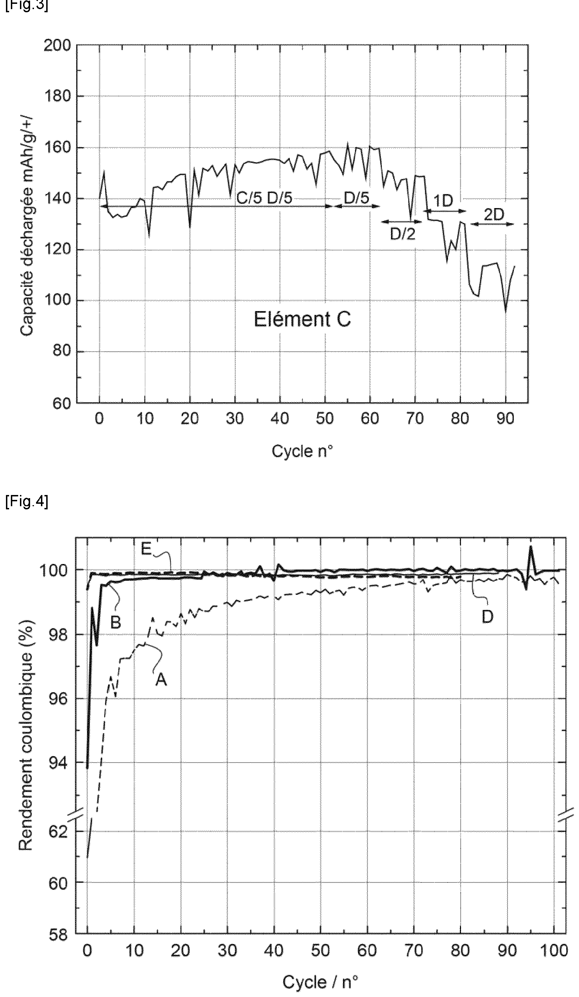

On a représenté sur la Figure 3 la variation de la capacité déchargée de l'élément C au cours du cyclage. On note que l'élément C perd progressivement de la capacité à partir du 50^{ème} cycle. Lorsque la décharge s'effectue à un plus fort courant (D/2, 1D et 2D), la perte de capacité est encore plus rapide. L'élément B selon l'invention, qui a aussi été cyclé au régime de C/5, présente de meilleures performances que l'élément C. Cet essai montre que le choix de la matière active cathodique n'a pas seulement un effet sur la tension de l'élément, mais a aussi une influence sur la capacité de l'élément à cycler sur une longue période à de forts courants de décharge.

### c) Comparaison du rendement coulombique des éléments A, B, D et E :

Le rendement coulombique des éléments A, B, D et E a été calculé pour chaque cycle d'un cyclage à 25°C constitué de charges à C/5 et de décharges à D/5. La tension de coupure en charge était de 3,5 V ou de 4,2 V selon la nature des matériaux d'électrodes. L'arrêt de la charge intervenait soit lorsque le courant de charge devenait inférieur à C/50, soit lorsque la durée nécessaire pour que le courant de charge devienne inférieur à C/50 dépassait 1 h. Les différentes courbes de variation du rendement coulombique des éléments A, B, D et E ont été représentées à la figure 4. Ces résultats permettent de tirer les conclusions suivantes :
- En élément LiNi_{0,5}Mn_{1,5}O₄/TiNb₂O₇, l'électrolyte non fluoré EC:PC:EMC:DMC ne permet pas d'atteindre un rendement coulombique suffisant pour assurer une durée de vie suffisante à l'élément (élément A hors invention).
- En éléments LiNi_{0,5}Mn_{1,5}O₄/TiNb₂O₇ et NMC/graphite, l'électrolyte fluoré améliore le rendement coulombique, donc la durée de vie des éléments (élément B selon l'invention et élément E hors invention respectivement)
- Malgré un rendement coulombique plus faible aux cycles initiaux (établissement des interfaces), l'électrolyte fluoré en élément LiNi_{0,5}Mn_{1,5}O₄/TiNb₂O₇ (élément B selon l'invention) présente aux cycles suivants un rendement coulombique légèrement supérieur à celui d'un élément NMC/graphite (élément E selon le document WO 2021/037721 A1), indicateur d'une durée de vie de l'élément B supérieure à celle de l'élément E.
- De plus, l'élément LiNi_{0,5}Mn_{1,5}O₄/TiNb₂O₇ avec l'électrolyte fluoré (élément B) libère moins d'énergie en cas de surcharge ou de surchauffe que l'élément NMC/graphite (élément E selon le document WO 2021/037721 A1).

## Revendications

1. Elément électrochimique comprenant :
a) une cathode contenant une matière active fonctionnant à un potentiel d'au moins 4,7 V par rapport au couple Li⁺/Li ;
b) une anode comprenant au moins un oxyde de titane et de niobium (TNO) de formule :
LiₓTi_{a-y}M_{y}Nb_{b-z}M'_{z}O_{((x+4a+5b)/2)-c-dXc}où 0 ≤ x ≤ 5 ; 0 ≤ y ≤ 1 ; 0 ≤ z ≤ 2 ; 1 ≤ a ≤ 5 ; 1 ≤ b ≤ 25 ; 0,25 ≤ a/b ≤ 2 ; 0 ≤ c ≤ 2 ; 0 ≤ d ≤ 2 ; 0 < a-y ; 0 < b-z ;
M et M' représentent chacun au moins un élément choisi dans le groupe constitué de Li, Na, K, Mg, Ca, B, Sc, Ti, V, Cr, Mn, Fe, Co, Ni, Cu, Zn, Al, Y, Zr, Nb, Mo, Ru, Ag, Sn, Sb, Ta, W, Bi, La, Pr, Eu, Nd et Sm ;
X représente au moins un élément choisi dans le groupe constitué de S, F, CI et Br ;
c) un électrolyte comprenant un solvant comprenant :
- soit un mélange de 1,1,1,3,3,3-hexafluoro-2-méthoxypropane (HFMP) et/ou de 1,1,1,3,3,3-hexafluoro-2-(fluorométhoxy)propane (HFMFP), de monofluorocarbonate d'éthylène (F1EC) et de carbonate de 2,2,2-trifluoroéthyle méthyle (F3EMC) ;
- soit un mélange de 1,1,1,3,3,3-hexafluoro-2-méthoxypropane (HFMP) et/ou de 1,1,1,3,3,3-hexafluoro-2-(fluorométhoxy)propane (HFMFP), de monofluorocarbonate d'éthylène (F1EC) et d'acétate de 2,2,2-trifluoroéthyle (F3EA).

2. Elément selon la revendication 1, dans lequel l'électrolyte comprend en outre du difluorophosphate de lithium LiPO₂F₂.

3. Elément électrochimique selon la revendication 1 ou 2, dans lequel la matière active fonctionnant à un potentiel d'au moins 4,7 V par rapport au couple Li⁺/Li est choisie parmi :
i) un composé de formule LiₓMn_{2-y-z}M'_{y}M"_{z}O₄ (LMO) où M' et M" sont choisis dans le groupe consistant en B, Mg, AI, Si, Ca, Ti, V, Cr, Fe, Co, Ni, Cu, Zn, Y, Zr, Nb et Mo ; M' et M" étant différents l'un de l'autre, et 1≤x≤1,4 ; 0≤y≤0,6 ; 0≤z≤0,2 avec 0<y+z ;
ii) un composé de formule LiₓM_{1-y-z}M'_{y}M"_{z}PO₄ (LMP), où M est Ni ou Co ; M, M' et M" étant différents les uns des autres ; M' et M" étant choisis dans le groupe consistant en B, Mg, AI, Si, Ca, Ti, V, Cr, Fe, Mn, Co, Ni, Cu, Zn, Y, Zr, Nb et Mo, avec 0,8≤x≤1,2 ; 0,5≤1-y-z≤1 ; 0≤y≤0,5 ; 0≤z≤0,2 ;
iii) un composé de formule Li₁₊ₓM₁₋ₓO_{2-y}F_{y} de structure cristalline cubique où M représente au moins un élément choisi dans le groupe constitué de Na, K, Mg, Ca, B, Sc, Ti, V, Cr, Mn, Fe, Co, Ni, Cu, Zn, Al, Y, Zr, Nb, Mo, Ru, Ag, Sn, Sb, Ta, W, Bi, La, Pr, Eu, Nd et Sm et où 0 ≤ x ≤ 0,5 et 0 ≤ y ≤ 1 ; et un mélange de plusieurs des composés i), ii) et iii).

4. Elément électrochimique selon la revendication 3, dans lequel la matière active fonctionnant à un potentiel d'au moins 4,7 V par rapport au couple Li⁺/Li est mélangée à au moins un phosphate lithié de formule :
LiₓMn_{1-y-z}Fe_{y}M_{z}PO₄ où 0,8≤x≤1,2 ; 0≤1-y-z<1 ; 0<y≤1 ; 0≤z≤0,2 et M est choisi dans le groupe constitué de B, Mg, AI, Si, Ca, Ti, V, Cr, Co, Ni, Cu, Zn, Y, Zr, Nb et Mo.

5. Elément électrochimique selon la revendication 3 ou 4, dans lequel la matière active fonctionnant à un potentiel d'au moins 4,7 V par rapport au couple Li⁺/Li est un composé de formule LiₓMn_{2-y-z}Ni_{y}M"_{z}O₄ (LMNO), avec de préférence z=0.

6. Elément électrochimique selon l'une des revendications précédentes, dans lequel l'oxyde de titane et de niobium a pour formule TiNb₂O₇.

7. Elément électrochimique selon l'une des revendications précédentes, dans lequel l'électrolyte comprend en outre un sel de lithium choisi parmi l'hexafluorophosphate de lithium LiPF₆ et le bis(fluorosulfonyl)imidure de lithium Li(FSO₂)₂N (LiFSI).

8. Elément électrochimique selon l'une des revendications précédentes, dans lequel le solvant de l'électrolyte ne contient que des composés fluorés.

9. Elément électrochimique selon l'une des revendications 2 à 8, dans lequel l'électrolyte comprend au moins un sel de lithium et dans lequel le pourcentage massique de LiPO₂F₂ va de 0,1 à 1 % de la masse de l'ensemble constitué par le solvant et ledit au moins un sel de lithium.

10. Elément électrochimique selon l'une des revendications précédentes, dans lequel l'électrolyte comprend en outre du sulfate d'éthylène (ESA) et/ou du carbonate de vinylène (VC).

11. Elément électrochimique selon l'une des revendications précédentes, dans lequel la cathode contient en outre au moins un composé choisi parmi le difluorophosphate de lithium (LiPO₂F₂), le sulfate d'éthylène (ESA) et l'oxalate de lithium (Li₂C₂O₄).

12. Elément électrochimique selon l'une des revendications précédentes, dans lequel :
a) la matière active fonctionnant à un potentiel d'au moins 4,7 V par rapport au couple Li⁺/Li a pour formule LiNi_{0,5}Mn_{1,5}O₄ ;
b) l'oxyde de titane et de niobium (TNO) a pour formule TiNb₂O₇ ;
c) l'électrolyte comprend :
- un mélange de 1,1,1,3,3,3-hexafluoro-2-méthoxypropane (HFMP) et/ou de 1,1,1,3,3,3-hexafluoro-2-(fluorométhoxy)propane (HFMFP), de monofluorocarbonate d'éthylène (F1EC) et d'acétate de 2,2,2-trifluoroéthyle (F3EA) ;
- de l'hexafluorophosphate de lithium LiPF_{6 :}
- du difluorophosphate de lithium LiPO₂F₂.

13. Elément selon la revendication 12, dans lequel :
- le 1,1,1,3,3,3-hexafluoro-2-méthoxypropane (HFMP) et/ou le 1,1,1,3,3,3-hexafluoro-2-(fluorométhoxy)propane (HFMFP) représente de 20 à 30 % du volume de solvant,
- le monofluorocarbonate d'éthylène (F1EC) représente de 25 à 35 % du volume de solvant,
- l'acétate de 2,2,2-trifluoroéthyle (F3EA) représente de 40 à 50 % du volume de solvant, la somme des pourcentages des différents composés étant égale à 100.

14. Elément selon la revendication 12 ou 13, dans lequel le pourcentage de difluorophosphate de lithium LiPO₂F₂ représente de 0,1 à 0,5% de la masse de l'ensemble constitué par le solvant et l'hexafluorophosphate de lithium LiPF₆.

## Patentansprüche

1. Elektrochemische Zelle, welche umfasst:
a) eine Kathode, die ein Aktivmaterial enthält, das bei einem Potential von mindestens 4,7 V gegenüber dem Paar Li⁺/Li wirkt;
b) eine Anode, die mindestens ein Titan-Niob-Oxid (TNO) mit folgender Formel umfasst:
LiₓTi_{a-y}M_{y}Nb_{b-z}M'_{z}O_{((x+4a+5b)/2)-c-d}X_{c}, wobei 0 ≤ x ≤ 5; 0 ≤ y ≤ 1; 0 ≤ z ≤ 2; 1 ≤ a ≤ 5; 1 ≤ b ≤ 25; 0,25 ≤ a/b ≤ 2; 0 ≤ c ≤ 2; 0 ≤ d ≤ 2; 0 < a-y; 0 < b-z;
M und M' jeweils mindestens ein Element darstellen, das aus der Gruppe ausgewählt ist, die aus Li, Na, K, Mg, Ca, B, Sc, Ti, V, Cr, Mn, Fe, Co, Ni, Cu, Zn, Al, Y, Zr, Nb, Mo, Ru, Ag, Sn, Sb, Ta, W, Bi, La, Pr, Eu, Nd und Sm besteht;
X mindestens ein Element darstellt, das aus der Gruppe ausgewählt ist, die aus S, F, Cl und Br besteht;
c) einen Elektrolyten, der ein Lösungsmittel umfasst, das umfasst:
- entweder eine Mischung aus 1,1,1,3,3,3-Hexafluor-2-methoxypropan (HFMP) und/oder aus 1,1,1,3,3,3-Hexafluor-2-(fluormethoxy)propan (HFMFP), aus Ethylenmonofluorcarbonat (F1EC) und aus 2,2,2-Trifluorethylmethylcarbonat (F3EMC);
- oder eine Mischung aus 1,1,1,3,3,3-Hexafluor-2-methoxypropan (HFMP) und/oder aus 1,1,1,3,3,3-Hexafluor-2-(fluormethoxy)propan (HFMFP), aus Ethylenmonofluorcarbonat (F1EC) und aus 2,2,2-Trifluorethylacetat (F3EA).

2. Zelle nach Anspruch 1, wobei der Elektrolyt außerdem Lithiumdifluorphosphat LiPO₂F₂ umfasst.

3. Elektrochemische Zelle nach Anspruch 1 oder 2, wobei das Aktivmaterial, das bei einem Potential von mindestens 4,7 V gegenüber dem Paar Li⁺/Li wirkt, ausgewählt ist aus:
i) einer Verbindung mit der Formel LiₓMn_{2-y-z}M'_{y}M"_{z}O₄ (LMO), wobei M' und M" aus der Gruppe ausgewählt sind, die aus B, Mg, Al Si, Ca, Ti, V, Cr, Fe, Co, Ni, Cu, Zn, Y, Zr, Nb und Mo besteht; M' und M" voneinander verschieden sind und 1 ≤ x ≤ 1,4; 0 ≤ y ≤ 0,6; 0≤ z ≤ 0,2, mit 0 < y+z;
ii) einer Verbindung mit der Formel LiₓM_{1-y-z}M'_{y}M"_{z}PO₄ (LMP), wobei M Ni oder Co ist; M, M' und M" voneinander verschieden sind; M' und M" aus der Gruppe ausgewählt sind, die aus B, Mg, Al Si, Ca, Ti, V, Cr, Fe, Mn, Co, Ni, Cu, Zn, Y, Zr, Nb und Mo besteht, mit 0,8 ≤ x ≤ 1,2; 0,5 ≤ 1-y-z ≤ 1; 0 ≤ y ≤ 0,5; 0 ≤ z ≤ 0,2;
iii) einer Verbindung mit der Formel Li₁₊ₓM₁₋ₓO_{2-y}F_{y} mit kubischer Kristallstruktur, wobei M mindestens ein Element darstellt, das aus der Gruppe ausgewählt sind, die aus Na, K, Mg, Ca, B, Sc, Ti, V, Cr, Mn, Fe, Co, Ni, Cu, Zn, Al, Y, Zr, Nb, Mo, Ru, Ag, Sn, Sb, Ta, W, Bi, La, Pr, Eu, Nd und Sm besteht und wobei 0 ≤ x ≤ 0,5 und 0 ≤ y ≤ 1;
und einer Mischung aus mehreren der Verbindungen i), ii) und iii).

4. Elektrochemische Zelle nach Anspruch 3, wobei das Aktivmaterial, das bei einem Potential von mindestens 4,7 V gegenüber dem Paar Li⁺/Li wirkt, gemischt ist mit mindestens einem lithiierten Phosphat mit der Formel:
LiₓMn_{1-y-z}Fe_{y}M_{z}PO₄, wobei 0,8 ≤ x ≤ 1,2; 0 ≤ 1-y-z < 1; 0 < y ≤ 1; 0 ≤ z ≤ 0,2, und M aus der Gruppe ausgewählt ist, die aus B, Mg, Al Si, Ca, Ti, V, Cr, Co, Ni, Cu, Zn, Y, Zr, Nb und Mo besteht.

5. Elektrochemische Zelle nach Anspruch 3 oder 4, wobei das Aktivmaterial, das bei einem Potential von mindestens 4,7 V gegenüber dem Paar Li⁺/Li wirkt, eine Verbindung mit der Formel LiₓMn_{2-y-2}Ni_{y}M"_{z}O₄ (LMNO) ist, vorzugsweise mit z = 0.

6. Elektrochemische Zelle nach einem der vorhergehenden Ansprüche, wobei das Titan-Niob-Oxid die Formel TiNb₂O₇ hat.

7. Elektrochemische Zelle nach einem der vorhergehenden Ansprüche, wobei der Elektrolyt außerdem ein Lithiumsalz umfasst, das aus Lithiumhexafluorphosphat LiPF₆ und Lithiumbis (fluorsulfonyl) imid Li(FSO₂)₂N (LiFSI) ausgewählt ist.

8. Elektrochemische Zelle nach einem der vorhergehenden Ansprüche, wobei das Lösungsmittel des Elektrolyten nur fluorierte Verbindungen enthält.

9. Elektrochemische Zelle nach einem der Ansprüche 2 bis 8, wobei der Elektrolyt mindestens ein Lithiumsalz umfasst und wobei der Massenanteil von LiPO₂F₂ 0,1 bis 1 % der Masse der aus dem Lösungsmittel und dem mindestens einen Lithiumsalz bestehenden Gesamtheit beträgt.

10. Elektrochemische Zelle nach einem der vorhergehenden Ansprüche, wobei der Elektrolyt außerdem Ethylenphosphat (ESA) und/oder Vinylencarbonat (VC) umfasst.

11. Elektrochemische Zelle nach einem der vorhergehenden Ansprüche, wobei die Kathode außerdem mindestens eine Verbindung enthält, die aus Lithiumdifluorphosphat (LiPO₂F₂), Ethylenphosphat (ESA) und Lithiumoxalat (Li₂C₂O₄) ausgewählt ist.

12. Elektrochemische Zelle nach einem der vorhergehenden Ansprüche, wobei:
a) das Aktivmaterial, das bei einem Potential von mindestens 4,7 V gegenüber dem Paar Li⁺/Li wirkt, die Formel LiNi_{0,5}Mn_{1,5}O₄ hat;
b) das Titan-Niob-Oxid (TNO) die Formel TiNb₂O₇ hat;
c) der Elektrolyt umfasst:
- eine Mischung aus 1,1,1,3,3,3-Hexafluor-2-methoxypropan (HFMP) und/oder aus 1,1,1,3,3,3-Hexafluor-2-(fluormethoxy)propan (HFMFP), aus Ethylenmonofluorcarbonat (F1EC) und aus 2,2,2-Trifluorethylacetat (F3EA);
- Lithiumhexafluorphosphat LiPF₆;
- Lithiumdifluorphosphat LiPO₂F₂.

13. Zelle nach Anspruch 12, wobei
- das 1,1,1,3,3,3-Hexafluor-2-methoxypropan (HFMP) und/oder das 1,1,1,3,3,3-Hexafluor-2-(fluormethoxy)propan (HFMFP) 20 bis 30 % des Lösungsmittelvolumens einnehmen,
- das Ethylenmonofluorcarbonat (F1EC) 25 bis 35 % des Lösungsmittelvolumens einnimmt,
- das 2,2,2-Trifluorethylacetat (F3EA) 40 bis 50 % des Lösungsmittelvolumens einnimmt, wobei die Summe der prozentualen Anteile der verschiedenen Verbindungen gleich 100 % ist.

14. Zelle nach Anspruch 12 oder 13, wobei der prozentuale Anteil von Lithiumdifluorphosphat LiPO₂F₂ 0,1 bis 0,5 % der Masse der aus dem Lösungsmittel und dem Lithiumhexafluorphosphat LiPF₆ bestehenden Gesamtheit beträgt.

## Claims

1. An electrochemical cell comprising:
a) a cathode containing an active material operating at a potential of at least 4.7 V with respect to the Li+/Li couple;
b) an anode comprising at least one titanium niobium oxide (TNO) of the formula: LiₓTi_{a-y}M_{y}Nb_{b-z}M'_{z}O_{((x+4a+5b)/2)-c-a}X_{c} where 0 ≤ x ≤ 5 ; 0 ≤ y ≤ 1 ; 0 ≤ z ≤ 2 ; 1 ≤ a ≤ 5 ; 1 ≤ b ≤ 25 ; 0,25 ≤ a/b ≤ 2 ; 0 ≤ c ≤ 2 ; 0 ≤ d ≤ 2 ; 0 < a-y ; 0 < b-z ; M and M' each represent at least one element selected from the group consisting of Li, Na, K, Mg, Ca, B, Sc, Ti, V, Cr, Mn, Fe, Co, Ni, Cu, Zn, Al, Y, Zr, Nb, Mo, Ru, Ag, Sn, Sb, Ta, W, Bi, La, Pr, Eu, Nd and Sm; X represents at least one element selected from the group consisting of S, F, Cl, and Br;
c) an electrolyte comprising a solvent comprising:
- either a mixture of 1,1,1,3,3,3-hexafluoro-2-methoxypropane (HFMP) and/or 1,1, 1,3,3,3-hexafluoro-2-(fluoromethoxy)propane (HFMFP), ethylene monofluorocarbonate (F1EC) and 2,2,2-trifluoroethyl methyl carbonate (F3EMC);
- or a mixture of 1,1,1,3,3,3-hexafluoro-2-methoxypropane (HFMP) and/or 1,1,1,3,3,3-hexafluoro-2-(fluoromethoxy)propane (HFMFP), ethylene monofluorocarbonate (F1EC) and 2,2,2-trifluoroethyl acetate (F3EA).

2. The electrochemical cell according to claim 1, wherein the electrolyte further comprises lithium difluorophosphate LiPO₂F₂.

3. The electrochemical cell according to claim 1 or 2, wherein the active material operating at a potential of at least 4.7 V with respect to the Li+/Li couple is selected from:
i) a compound of formula LiₓMn_{2-y-z}M'_{y}M"_{z}O₄ (LMO) where M' and M" are selected from the group consisting of B, Mg, Al, Si, Ca, Ti, V, Cr, Fe, Co, Ni, Cu, Zn, Y, Zr, Nb and Mo; M' and M" being different from each other, and 1≤x≤1.4; 0≤y≤0.6; 0≤z≤0.2 with 0<y+z;
ii) a compound of formula LiₓM_{1-y-z}M'_{y}M"_{z}PO₄ (LMP), where M is Ni or Co;
M, M' and M" being different from each other; M' and M" being selected from the group consisting of B, Mg, Al, Si, Ca, Ti, V, Cr, Fe, Mn, Co, Ni, Cu, Zn, Y, Zr, Nb and Mo, with 0.8≤x≤1.2; 0.5≤1 y-z≤1; 0≤y≤0.5; 0≤z≤0.2;
iii) a compound of formula Li₁₊ₓM₁₋ₓO_{2-y}F_{y} of cubic crystalline structure where M represents at least one element selected from the group consisting of Na, K, Mg, Ca, B, Sc, Ti, V, Cr, Mn, Fe, Co, Ni, Cu, Zn, Al, Y, Zr, Nb, Mo, Ru, Ag, Sn, Sb, Ta, W, Bi, La, Pr, Eu, Nd and Sm and where 0 ≤ x ≤ 0.5 and 0 ≤ y ≤ 1; and a mixture of several of the compounds i), ii) and iii).

4. The electrochemical cell according to claim 3, wherein the active material operating at a potential of at least 4.7 V with respect to the Li+/Li couple is mixed with at least one lithium phosphate of formula:
LiₓMn_{1-y-z}Fe_{y}M_{z}PO₄ where 0.8≤x≤1.2; 0≤1-y-z<1; 0<y≤1; 0≤z≤0.2 and M is selected from the group consisting of B, Mg, Al, Si, Ca, Ti, V, Cr, Co, Ni, Cu, Zn, Y, Zr, Nb, and Mo.

5. The electrochemical cell according to claim 3 or 4, wherein the active material operating at a potential of at least 4.7 V with respect to the Li+/Li couple is a compound of formula LiₓMn_{2-y-z}Ni_{y}M"_{z}O₄ (LMNO), with preferably z = 0.

6. The electrochemical cell according to one of the preceding claims, wherein the titanium and niobium oxide has the formula TiNb₂O₇.

7. The electrochemical cell according to one of the preceding claims, further comprising a lithium salt selected from lithium hexafluorophosphate LiPF₆ and lithium bis(fluorosulfonyl)imide Li(FSO₂)₂N (LiFSI).

8. The electrochemical cell according to one of the preceding claims, in which the electrolyte solvent contains only fluorinated compounds.

9. The electrochemical cell according to one of claims 2 to 8, comprising at least one lithium salt and in which the mass percentage of LiPO₂F₂ ranges from 0.1 to 1% of the mass of the whole consisting of the solvent and said at least one lithium salt.

10. The electrochemical cell according to one of the preceding claims, further comprising ethylene sulfate (ESA) and/or vinylene carbonate (VC).

11. The electrochemical cell according to one of the preceding claims, in which the cathode further contains at least one compound selected from lithium difluorophosphate (LiPO₂F₂), ethylene sulfate (ESA), and lithium oxalate (Li₂C₂O₄).

12. The electrochemical cell according to one of the preceding claims, in which:
a) the active material operating at a potential of at least 4.7 V with respect to the Li+/Li couple has the formula LiNi_{0,5}Mn_{1,5}O₄ ;
b) titanium niobium oxide (TNO) has the formula TiNb₂O₇;
c) the electrolyte comprises:
- a mixture of 1,1,1,3,3,3-hexafluoro-2-methoxypropane (HFMP) and/or 1,1,1,3,3,3-hexafluoro-2-(fluoromethoxy)propane (HFMFP), ethylene monofluorocarbonate (F1EC) and 2,2,2-trifluoroethyl acetate (F3EA);
- lithium hexafluorophosphate LiPF₆;
- lithium difluorophosphate LiPO₂F₂.

13. The electrochemical cell according to claim 12, in which:
- the 1,1,1,3,3,3-hexafluoro-2-methoxypropane (HFMP) and/or the1,1,1,3,3,3-hexafluoro-2-(fluoromethoxy)propane (HFMFP) represents 20 to 30% of the volume of solvent,
- the ethylene monofluorocarbonate (F1EC) represents 25 to 35% of the solvent volume,
- the 2,2,2-trifluoroethyl acetate (F3EA) represents 40 to 50% of the volume of solvent, the sum of the percentages of the various compounds being equal to 100.

14. The electrochemical cell according to claim 12 or 13, wherein the percentage of lithium difluorophosphate LiPO₂F₂ represents from 0.1 to 0.5% of the mass of the whole consisting of the solvent and lithium hexafluorophosphate LiPF₆.
